# EUROPEAN PATENT APPLICATION

(11) **EP 4 300 699 A1**
(43) Date of publication of application: **03.01.2024**
(21) Application number: 23180569.8
(22) Date of filing: 21.06.2023
(51) Int. Cl.: H01M 50/519, H01M 50/569

(54) **BATTERY PACK**

(30) Priority: 21.06.2022 KR 20220075677
(71) Applicant: Samsung SDI Co., Ltd., Yongin-si, Gyeonggi-do 17084 (KR)
(72) Inventor: Lee, Hyeok, 17084 Yongin-si, Gyeonggi-do (KR); Ahn, Jaepil, 17084 Yongin-si, Gyeonggi-do (KR)
(74) Representative: Gulde & Partner

(57) **Abstract**

Provided is a battery pack. The battery pack includes at least one battery cell and at least one sensing unit for acquiring state information of the battery cell, the sensing unit including sensing substrates which extend in parallel in a first direction and include a first position where at least one sensing device is formed, and at least one sensing terminal connected to the sensing substrate at a second position different from the first position and connected to the battery cell side to acquire the state information, where the sensing substrate and the sensing terminal i) overlap each other at the first and second positions, and ii) extend to cross each other so that upper and lower positions are reversed in the second direction in which the sensing substrate and the sensing terminal overlap each other at the first and second positions. Provided is the battery pack in which the sensing substrate provided as a one-sided circuit board is applied to form the sensing unit for collecting state information of the battery cell, and top and the bottom surface of the sensing substrate is laminated with the sensing device and the sensing terminal that extend to cross each other.

## Description

### Field

One or more embodiments relate to a battery pack.

### Description of the Related Art

Typically, secondary batteries are capable of charging and discharging, unlike primary batteries which are not capable of charging. Secondary batteries may be used as energy sources for mobile devices, electric vehicles, hybrid vehicles, electric bicycles, uninterruptible power supplies, etc., and may be used in the form of a single battery or in the form of a module in which multiple batteries are connected and bundled into a single unit, depending on the type of external devices applied.

Since output voltage or output current may increase depending on the number of built-in batteries, a single battery may be used in small mobile devices such as cell phones which can operate for a certain period of time with the output and capacity of the single battery while a battery in the form of a module may be used in electric cars, and hybrid cars which require high power consumption for long-term and high power driving.

### SUMMARY

According to one or more embodiments, a battery pack includes:
at least one battery cell; and
at least one sensing unit for acquiring state information of the battery cell, the sensing unit including:
   at least one sensing substrate which extend in parallel in a first direction and include a first position where at least one sensing device is formed; and
   at least one sensing terminal connected to the sensing substrate at a second position different from the first position and connected to the battery cell side to acquire the state information;
   wherein the sensing substrate and the sensing terminal
   overlap each other at the first and second positions, and
   extend to cross each other so that upper and lower positions are reversed in the second direction in which the sensing substrate and the sensing terminal overlap each other at the first and second positions. By forming laminates of the sensing device and the sensing terminal on the opposite top and bottom surfaces of the sensing substrate, soldering between the sensing device and the sensing substrate may be stably held up and supported by the sensing terminal.

For example, in the first position, the sensing substrate on which the sensing device is formed and the sensing terminal may be arranged at an upper position opposite to the battery cell and at a lower position facing the battery cell, respectively.

In the second position, the sensing substrate and the sensing terminal may be arranged at the lower position facing the battery cell and at the upper position opposite the battery cell, respectively.

For example, the sensing device may be formed on a top surface of the sensing substrate opposite to the battery cell.

For example, at least one of the sensing substrate and the sensing terminal may include a deformable unit to connect upper and lower positions that are reversed at the first and second positions.

For example, the deformable unit may connect the upper and lower positions that are reversed at the first and second positions in a stepped or inclined manner.

For example, the sensing substrate may cross the sensing terminal and may include the deformable unit to connect a position higher than the sensing terminal at the first position and a position lower than the sensing terminal at the second position.

For example, the sensing terminal may cross the sensing substrate and may include the deformable unit to connect a position lower than the sensing substrate at the first position and a position higher than the sensing substrate at the second position.

For example, at a third position between the first and second positions of the sensing substrate in the first direction, a through hole through which the sensing terminal passes may be formed so that the sensing terminal crosses the sensing substrate.

For example, the deformable unit may be formed in the through hole.

For example, in the third direction which crosses the first and second directions, the periphery of the through hole of the sensing substrate extending in the first direction to surround the through hole at a position beyond the through hole of the sensing substrate may cross a through unit of the sensing terminal penetrating the through hole.

For example, at least one of the periphery of the through hole and the through unit may extend obliquely to connect the upper and lower positions that are reversed at the first and second positions and may cross each other.

For example, the periphery of the through hole and the through unit may cross each other while extending obliquely in opposite directions to connect the upper and lower positions that are reversed at the first and second positions.

For example, the sensing substrate may be bonded to the sensing terminal through thermal compression or laminating.

For example, in the first direction,
the sensing substrate may extend from the first position to the second position, and
the sensing terminal may extend from the first position to a fourth position beyond the second position.

For example, the sensing terminal may be connected to the battery cell side at the fourth position beyond the sensing substrate in the first direction.

For example, the sensing terminal may be connected to a terminal surface of the battery cell on which electrodes are formed.

For example, a welding unit may be formed between the sensing terminal and the terminal surface of the battery cell.

For example, a metal layer including a first bonding pad for connection with the sensing device may be formed at the first position of the sensing substrate.

For example, a first adhesive member for coupling with the sensing terminal may be provided at the first position of the sensing substrate.

For example, at the first position,
the metal layer including the first bonding pad may be formed on a top surface of the sensing substrate opposite to the battery cell, and
the first adhesive member may be formed on a bottom surface of the sensing substrate facing the battery cell.

For example, a metal layer including a second bonding pad for coupling with the sensing terminal may be formed at the second position of the sensing substrate.

For example, a second adhesive member for coupling with the sensing terminal may be provided at the second position of the sensing substrate.

For example, metal layers including the first and second bonding pads for connection with the sensing device and the sensing terminal at the first and second positions respectively may be formed, and
the metal layers including the first and second bonding pads may be formed on the top surface of the sensing substrate opposite to the battery cell.

For example, the sensing substrate may be provided as a one-sided circuit board that does not include a metal layer on the bottom surface facing the battery cell. One or more embodiments include a battery pack in which a sensing substrate provided as a one-sided circuit board is applied to form a sensing unit for collecting state information of a battery cell, and top and bottom surfaces of the sensing substrate may be laminated with a sensing device and a sensing terminal that extend to cross each other. Further, according to the disclosure, by applying a sensing substrate provided as a one-sided circuit board, soldering with sensing devices and soldering with sensing terminals may be collectively performed on one side of the sensing substrate.

According to the disclosure, since the sensing device is not disposed on the bottom surface of the sensing substrate facing the battery cell, but is disposed on the top surface of the sensing substrate opposite to the battery cell, damage to the sensing device due to impact with the battery cell may be prevented.
Additional aspects will be set forth in part in the description which follows and, in part, will be apparent from the description, or may be learned by practice of the presented embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exploded perspective view of a battery pack according to an embodiment;
FIG. 2 is an exploded perspective view of a portion of the battery pack illustrated in FIG. 1, showing the arrangement of sensing units and battery cells;
FIG. 3 is a perspective view of the sensing unit illustrated in FIG. 2;
FIG. 4 is a cross-sectional view taken along line IV-IV in FIG. 3;
FIGS. 5 and 6 are diagrams showing different top and bottom surfaces of the sensing unit illustrated in FIG. 3, respectively;
FIG. 7 is a diagram showing the assembly of the sensing unit illustrated in FIG. 3;
FIG. 8 is a perspective view of a sensing unit according to an embodiment;
FIGS. 9 and 10 are diagrams showing different top and bottom surfaces of the sensing unit illustrated in FIG. 8, respectively; and
FIG. 11 is a cross-sectional view taken along line XI-XI in FIG. 8.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a battery pack according to a preferred embodiment will be described with reference to the accompanying drawings.

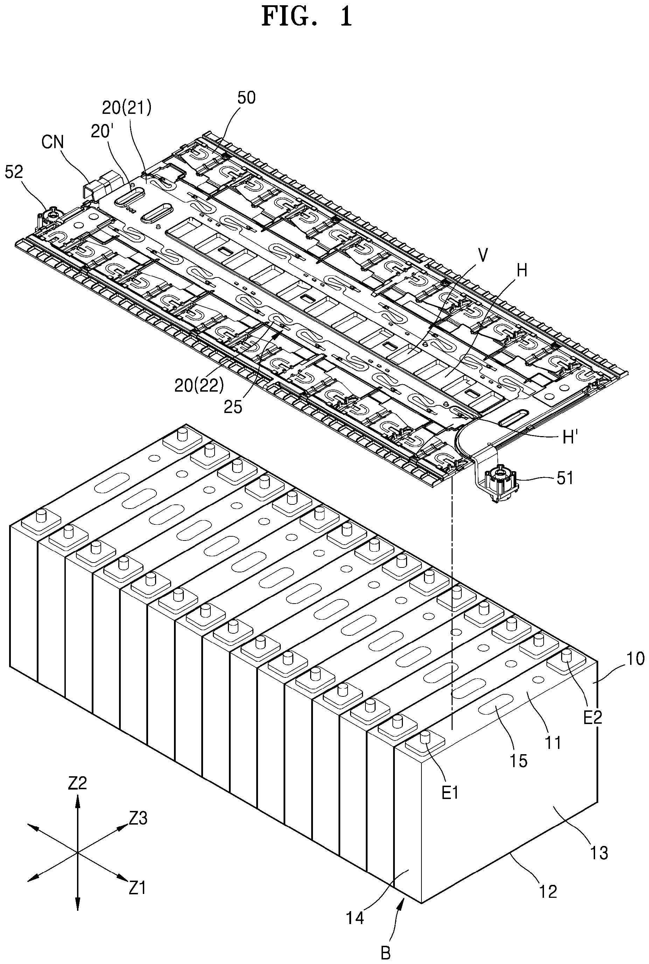

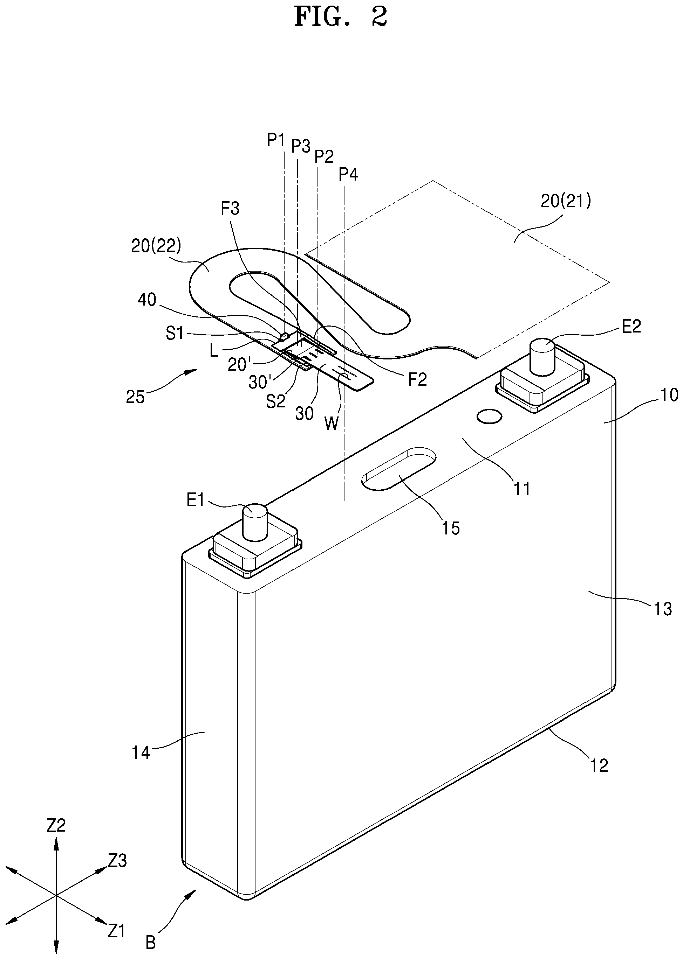

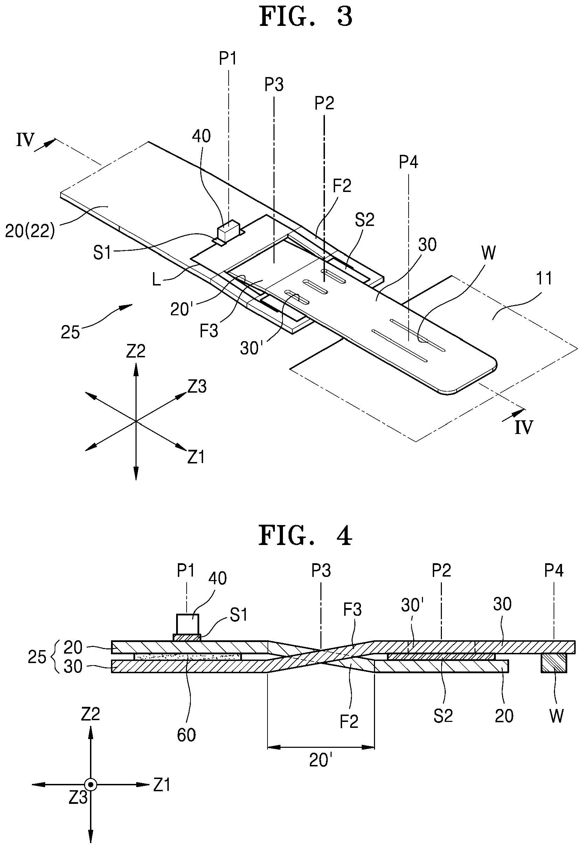

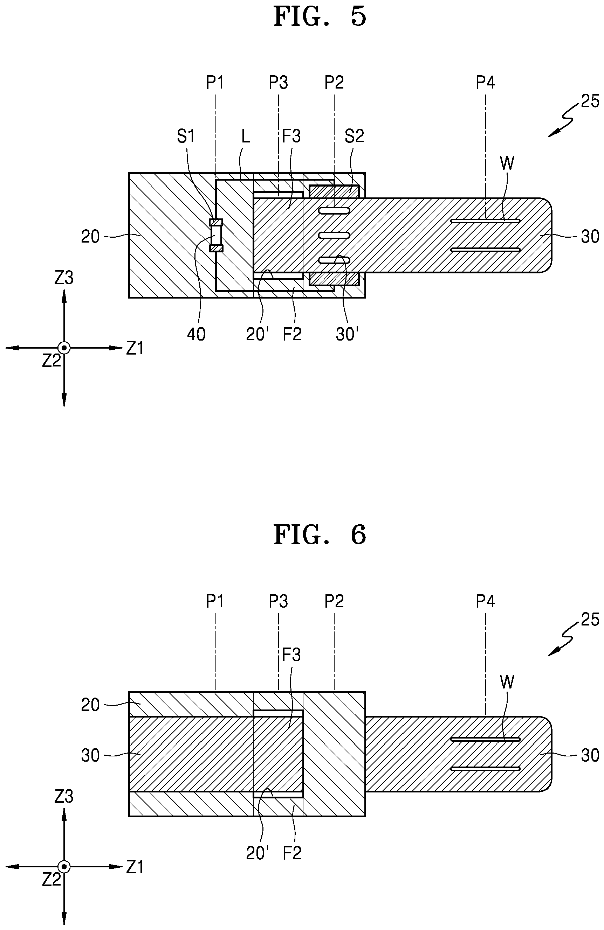

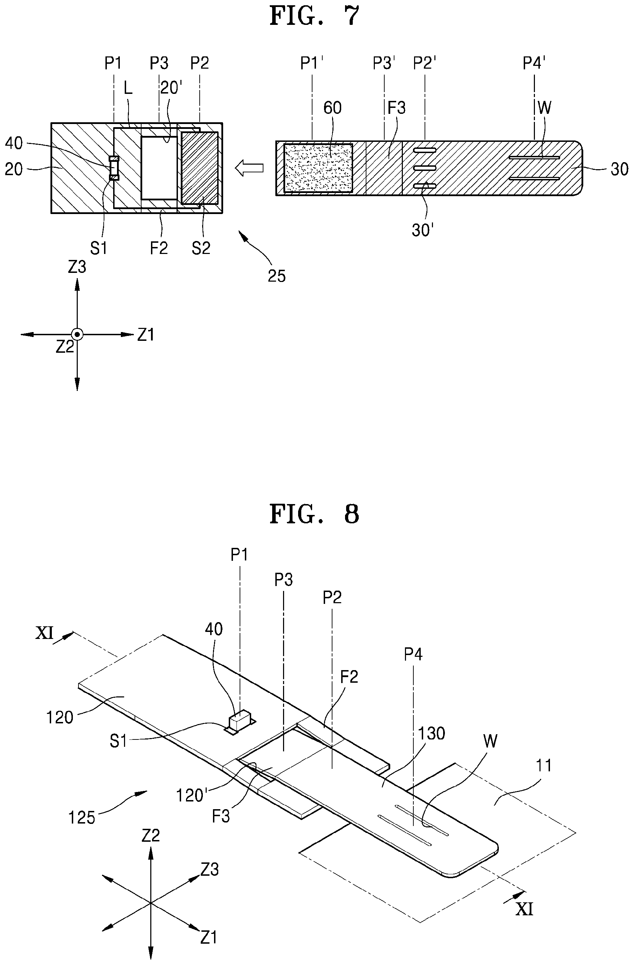

FIG. 1 is an exploded perspective view of a battery pack according to an embodiment. FIG. 2 is an exploded perspective view of a portion of the battery pack illustrated in FIG. 1, showing the arrangement of sensing units and battery cells. FIG. 3 is a perspective view of the sensing unit illustrated in FIG. 2. FIG. 4 is a cross-sectional view taken along line IV-IV in FIG. 3. FIGS. 5 and 6 are diagrams showing different top and bottom surfaces of the sensing unit illustrated in FIG. 3, respectively. FIG. 7 is a diagram showing the assembly of the sensing unit illustrated in FIG. 3.

Referring to FIG. 1, a battery pack according to an embodiment may include a plurality of battery cells B arranged in a first direction Z1 and bus bars 50 disposed on the plurality of battery cells B to electrically connect the different battery cells B to each other. In addition, bus bar holders H may be positioned between the bus bars 50 and the battery cells B for electrical insulation therebetween and for aligning the assembly position of the bus bars 50. Sensing substrates 20 for collecting state information of the battery cells B may be positioned on the bus bar holders H, along with the bus bars 50. In an embodiment, the bus bars 50 may be connected to first and second electrode terminals E1 and E2 having different polarities disposed on a terminal surface 11 of the battery cell B in a third direction Z3 crossing the first direction Z1 in which the plurality of battery cells B are arranged. The first and second electrode terminals E1 and E2 may form first and second rows of electrode terminals E1 and E2 in the first direction Z1 in which the plurality of battery cells B are arranged, and the bus bars 50 electrically connected to the first and second rows of electrode terminals E1 and E2 may form first and second rows of bus bars 50 on the first and second rows of electrode terminals E1 and E2. In addition, between the first and second rows of electrode terminals E1 and E2 or the first and second rows of bus bars 50, the sensing substrates 20 for collecting state information of the plurality of battery cells B may be provided. For example, the first and second rows of bus bars 50 and the sensing substrates 20 arranged therebetween may be supported and arranged on the bus bar holders H for aligning the assembly position and for insulation from the battery cells B.

The battery cell B may include the terminal surface 11 on which the first and second electrode terminals E1 and E2 are formed, a bottom surface 12 opposite to the terminal surface 11, a wide side 13 covering a relatively large area, and a narrow side 14 covering a relatively small area, the sides 13 and 14 connecting the terminal surface 11 and the bottom surface 12. For example, the plurality of battery cells B arranged in the first direction Z1 may be positioned so that wide sides 13 face each other. On the terminal surface 11 of the battery cell B, a vent unit 15 may be formed between the first and second electrode terminals E1 and E2 of different polarities to relieve internal pressure of the battery cell B, and vent holes V and 20' may be respectively formed in the bus bar holder H and the sensing substrate 20 arranged on the vent unit to allow the flow of exhaust gas discharged through the vent unit 15 of the battery cell B. A connector CN electrically connected to the sensing substrate 20 may be formed at one end of the sensing substrate 20, and electrical connection between the sensing substrate 20 and a battery management system (BMS) not shown may be formed through the connector CN. In an embodiment, in addition to the vent hole V, an opening H' for exposing the sensing unit 25 including a connection unit 22 of the sensing substrate 20 to the terminal surface 11 of the battery cell B may be formed in the bus bar holder H.

The bus bars 50 may electrically connect different battery cells B, and the plurality of bus bars 50 electrically connected to each other may be electrically connected to external devices through input/output terminals 51 and 52. In the electrical connection of the plurality of battery cells B electrically connected through the bus bars 50, the input/output terminals 51 and 52 may include a pair of different input/output terminals 51 and 52 connected to the battery cells at one end and the other end and the bus bars connected to the battery cells at one end and the other end. The external devices to which the plurality of battery cells B are connected through the input/output terminals 51 and 52 may correspond to external loads receiving discharge power from the battery pack or external chargers supplying charging power to the battery pack.

The sensing substrate 20 may include a body 21 of the sensing substrate 20 and the connection unit 22 of the plurality of sensing substrates 20 branching from the body 21 of the sensing substrate 20 toward different battery cells B. Through the description, the sensing substrate 20 forming a portion of the sensing unit 25 may not refer to the body 21 of the sensing substrate 20, but refer to the connection unit 22 of the sensing substrate 20 branching from the body 21 of the sensing substrate 20 toward each battery cell B. Hereinafter, the sensing substrate 20 forming the sensing unit 25 is referred to as the sensing substrate 20 without being distinguished as the main body 21 and the connection unit 22 of the sensing substrate 20, but the sensing substrate 20 forming the sensing unit 25 may refer to the connection unit 22 branching from the body of the sensing substrate 20 toward the battery cell B. In an embodiment, the connection unit 22 of the sensing substrate 20 may extend in the shape of a serpentine meander from the body 21 of the sensing substrate 20, and the connection unit 22 of the sensing substrate 20 may extend in the shape of a meander to flexibly follow the displacement of the battery cell B following the first direction Z1 according to the expansion and contraction of the battery cell B.

Hereinafter, with reference to FIGS. 2 to 7, in an embodiment, the sensing unit 25 for collecting state information of a plurality of battery cells will be described in more detail.

That is, a battery pack according to an embodiment may include battery cells B, and sensing units 25 for acquiring state information of the battery cells B, the sensing units 25 including sensing substrates 20 which extend in parallel in a first direction Z1 and include a first position P1 where sensing devices 40 are formed, and sensing terminals 30 connected to the sensing substrates 20 at a second position P2 different from the first position P1 and connected to the battery cell B side to acquire the state information, wherein the sensing substrates 20 and the sensing terminals 30 i) overlap each other at the first and second positions P1 and P2, and ii) extend to cross each other so that upper and lower positions are reversed in the second direction Z2 in which the sensing substrates 20 and the sensing terminals 30 overlap each other at the first and second positions P1 and P2. A coupling hole 30' is formed in the sensing terminal 30 to provide coupling (soldering) between the sensing terminal 30 and the sensing substrate 20.

In an embodiment, the sensing unit 25 may measure the state information, such as temperature, voltage and current, of the battery cell B. For example, the sensing unit 25 including the sensing device 40 including a thermistor which measures temperature using the characteristic that resistance increases or decreases with temperature such as positive temperature coefficient thermistor (PTC) or negative temperature coefficient thermistor (NTC) for sensing temperature of the battery cell B may generate and output electric signals corresponding to temperature information of the battery cell B.

In an embodiment, the sensing substrate 20 and the sensing terminal 30 may extend in parallel in the first direction Z1, wherein the first direction Z1 may correspond to a length direction of the sensing substrate 20 and/or the sensing terminal 30 through the description. For reference, through the description, the second direction Z2 which is a direction crossing the first direction Z1 corresponding to the length direction may correspond to a thickness direction perpendicularly crossing the first direction Z1, or may refer to a thickness direction of each of the sensing substrate 20 and the sensing terminal 30, or a thickness direction of the entire sensing unit 25 including the sensing substrate 20 and the sensing terminal 30 assembled to each other. Through the description, upper and lower positions, higher position, or lower position may refer to a position along the vertical direction following the second direction Z2 or a relative position along the vertical direction following the second direction Z2. As will be described later, each of the sensing substrate 20 and the sensing terminal 30 may include a bottom surface facing the battery cell B and a top surface opposite to the battery cell B. Among different first and second positions P1 and P2 in the first direction Z1, at the first position P1, the sensing substrate 20 and the sensing terminal 30 may be positioned relatively at the upper position and the lower position, respectively. In other words, at the first position P1, the bottom surface of the sensing substrate 20 may face the top surface of the sensing terminal 30. Conversely, at the second position P2, the sensing substrate 20 and the sensing terminal 30 may be positioned at relatively upper and lower positions, respectively. In other words, the top surface of the sensing substrate 20 may face the bottom surface of the sensing terminal 30 at the second position P2.

As will be described later, the sensing substrate 20 and the sensing terminal 30 extending in parallel in the first direction Z1 may overlap in the second direction Z2 at the different first and second positions P1 and P2 in the first direction Z1 and may extend to cross each other so that the relative positions thereof in the second direction Z2 may be reversed at the first and second positions P1 and P2.

Through the description, the third direction Z3 which is a direction crossing the first and second directions Z1 and Z2 may refer to a width direction perpendicularly crossing the first and second directions Z1 and Z2. In addition, the first direction Z1 corresponding to the length direction and the third direction Z3 corresponding to the width direction may refer to the length direction and the width direction of the sensing substrate 20 and the sensing terminal 30, respectively, or the length direction and the width direction of the entire sensing unit 25 including the sensing substrate 20 and the sensing terminal 30 assembled to each other, respectively. As will be described later, in an embodiment, the sensing substrate 20 and the sensing terminal 30 extending in parallel in the first direction Z1 may extend to cross each other between the first and second positions P1 and P2 so that upper and lower positions are reversed at the different first and second positions P1 and P2 in the first direction Z1, and may cross each other through a through hole 20' formed at the third position P3 between the first and second positions P1 and P2, wherein the periphery of the through hole 20' out of the through hole 20' in the second direction Z2 among the sensing substrate 20 on which the through hole 20' is formed may cross a through unit of the sensing terminal 30 penetrating the through hole 20'.

Through the description, that the sensing substrate 20 crosses the sensing terminal 30 may mean that the sensing terminal 30 is arranged to face the opposite bottom and top surfaces of the sensing substrate 20 at the first and second positions P1 and P2 in the first direction Z1. For example, the sensing terminal 30 may face the bottom surface of the sensing substrate 20 at the first position P1 while the sensing terminal 30 may face the top surface of the sensing substrate 20 at the second position P2. In an embodiment, the sensing terminal 30 may cross the sensing substrate 20, penetrating the sensing substrate 20 at the third position P3 between the first and second positions P1 and P2 so that the relative upper and lower positions to the sensing substrate 20 at the first and second positions P1 and P2 are reversed. For example, that the sensing terminal 30 crosses the sensing substrate 20 may mean that, between the sensing terminal 30 and the sensing substrate 20 each having the opposite top and bottom surfaces, the sensing terminal 30 and the sensing substrate 20 are arranged so that the top surface of the sensing terminal 30 faces the bottom surface of the sensing substrate 20 at the first position P1 while the bottom surface of the sensing terminal 30 faces the top surface of the sensing substrate 20 at the second position P2. In other words, the sensing terminal 30 may be exposed to the bottom surface of the sensing substrate 20 at the first position P1, while the sensing terminal 30 may be exposed to the top surface of the sensing substrate 20 at the second position P2.

In an embodiment, the sensing terminal 30 and the sensing substrate 20 may each include opposite top and bottom surfaces in the second direction Z2, and the top and bottom surfaces of the sensing terminal 30 and the sensing substrate 20 may refer to opposite surfaces arranged in the same orientation. More specifically, the bottom surfaces of the sensing terminal 30 and the sensing substrate 20 may refer to surfaces relatively adjacent to the battery cell B or facing the battery cell B among the opposite top and bottom surfaces in the second direction Z2, and the top surfaces of the sensing terminal 30 and the sensing substrate 20 may refer to surfaces relatively far from the battery cell B or opposite the battery cell B among the opposite top and bottom surfaces in the second direction Z2.

The sensing terminal 30 may be exposed to the bottom surface of the sensing substrate 20 at the first position P1, i.e., disposed on the bottom surface of the sensing substrate 20 and leaving the top surface of the sensing substrate 20 as space for mounting the sensing device 40 at the first position P1, to allow connection of the sensing device 40 on the top surface of the sensing substrate 20 and to support the sensing substrate 20 where the sensing device 40 is formed, while the sensing terminal 30 may be exposed to the top surface of the sensing substrate 20 at the second position P2 different from the first position P1 to couple with the top surface of the sensing substrate 20.

According to an embodiment, as the sensing substrate 20 crosses the sensing terminal 30 and is provided as a one-sided circuit board, the opposite top and bottom surfaces of the sensing substrate 20 may be laminated with or coupled to the sensing device 40 and the sensing terminal 30. For example, at the first position P1, in the third direction Z3 from the bottom surface to the top surface of the sensing substrate 20, a laminate structure in which the sensing terminal 30, the sensing substrate 20, and the sensing device 40 are stacked may be formed. As will be described later, the sensing terminal 30 may form an input side to which state information of the battery cell B is input while forming a coupling with the battery cell B side at a fourth position P4, where the state information of the battery cell B may be transmitted to the sensing device 40 through the sensing terminal 30 extending from the second position P2 to the first position P1, and the state information of the battery cell B converted into electrical signals through the sensing device 40 may be transmitted through the sensing substrate 20 electrically connected to the sensing device 40 to a battery management system (BMS) connected to one end of the sensing substrate 20.

According to an embodiment as shown by e.g., Figs. 3, 4, the sensing substrate 20 may include opposite top and bottom surfaces in the second direction Z2. Among the opposite top and bottom surfaces, alternatively, a metal layer including bonding pads S1 and S2 for coupling with other components may be formed on the top surface of the sensing substrate 20 while the metal layer including bonding pads S1 and S2 for coupling with other components may not be formed on the bottom surface of the sensing substrate 20 opposite to the upper surface. For example, the sensing substrate 20 may be soldered to the sensing device 40 at the first position P1 and soldered to the sensing terminal 30 at the second position P2, through the metal layer including the first and second bonding pads S1 and S2 formed on the top surface of the sensing substrate 20.

In an embodiment, the sensing substrate 20 may be provided as a one-sided circuit board in which the metal layer including the first and second bonding pads S1 and S2 is formed on the top surface in the second direction Z2 and the metal layer is not formed on the bottom surface alternatively among the opposite top and bottom surfaces. In this way, the sensing substrate 20 applicable in an embodiment may be provided as a one-sided circuit board, and the sensing substrate 20 of such a one-sided circuit board may be understood as having a different configuration from a double-sided circuit board in which metal layers are formed on the top and bottom surfaces among the opposite top and bottom surfaces in the second direction Z2. For example, the one-sided circuit board may be formed through an easy process in a simplified form rather than the double-sided circuit board, thereby reducing the manufacturing cost.

In an embodiment, the sensing substrate 20 provided as a one-sided circuit board capable of reducing manufacturing cost in a relatively simplified form is applied, where the sensing substrate 20 and the sensing terminal 30 extend to cross each other to be soldered to other components through the metal layer formed on the top surface of the sensing substrate 20 alternatively among the top and bottom surfaces of the sensing substrate 20. Not a double-sided circuit board with metal layers on both sides, the sensing substrate 20 of the one-sided circuit board where a metal layer is formed on the top surface alternatively among the top and bottom surfaces is applied, where the opposite top and bottom surfaces of the sensing substrate 20 is laminated with the sensing device 40 and the sensing terminal 30.

In a comparative example, the sensing substrate 20 provided as a double-sided circuit board including metal layers on both the top and bottom surfaces is applied. For example, at a position corresponding to the first position P1 of the disclosure, the sensing device 40 may be stacked on the top surface of the sensing substrate 20, and the sensing terminal 30 may be stacked on the bottom surface of the sensing substrate 20. However, unlike the comparative example in which the sensing substrate 20 of the double-sided circuit board is applied, in an embodiment, the sensing substrate 20 of the one-sided circuit board having a relatively simple structure is applied, and a structure in which the sensing substrate 20 crosses the sensing terminal 30 is formed, thereby laminating the top and bottom surfaces of the sensing substrate 20 with the sensing device 40 and the sensing substrate 30, respectively.

In an embodiment, a laminate of the sensing device 40 and a laminate of the sensing terminal 30 may be formed on the opposite top and bottom surfaces of the sensing substrate 20. That is, the sensing device 40 and the sensing terminal 30 are formed on the opposite top and bottom surfaces of the sensing substrate 20 so that the sensing terminal 30 may stably hold and support the sensing substrate 20 on which the sensing device 40 is formed. As the sensing device 40 is arranged on the top surface of the sensing substrate 20 opposite to the battery cell B, rather than being arranged on the bottom surface of the sensing substrate 20 which faces the battery cell B, damage to the sensing device 40 due to impact with the battery cell B may be prevented.

In an embodiment, the sensing substrate 20 may form laminates of the sensing device 40 and the sensing terminal 30 through a metal layer formed on the top surface alternatively among the bottom surface facing the battery cell B and the top surface opposite to the battery cell, and may be provided as a one-sided circuit board in which a metal layer is formed on the top surface opposite to the battery cell B and is not formed on the bottom surface facing the battery cell B.

In an embodiment, the sensing substrate 20 and the sensing terminal 30 may extend to cross each other. Through the description, that the sensing substrate 20 crosses the sensing terminal 30 or the sensing substrate 20 and the sensing terminal 30 extend to cross each other may mean that the sensing substrate 20 and the sensing terminal 30 extend while crossing each other so that the upper and lower positions are reversed in the second direction Z2. For example, in an embodiment, the upper and lower positions of the sensing substrate 20 and the sensing terminal 30 may be reversed at the opposite first and second positions P1 and P2 in the first direction Z1. For example, while the sensing substrate 20 and the sensing terminal 30 may be arranged at the upper position and the lower position respectively in the second direction Z2 at the first position P1, the sensing terminal 30 and the sensing substrate 20 may be arranged at the upper position and the lower position respectively at the second position P2.

In more detail about the intersection between the sensing substrate 20 and the sensing terminal 30, the sensing substrate 20 may cross the sensing terminal 30 at the third position P3 between the first and second positions P1 and P2 in the first direction Z1, and may cross the sensing terminal 30 through a through hole 20' of the sensing substrate 20 formed at the third position P3. For example, the sensing terminal 30 may extend from the lower position of the sensing substrate 20 at the first position P1 to the upper position of the sensing substrate 20 at the second position P2 through the through hole 20' of the sensing substrate 20, where the through hole 20' of the sensing substrate 20 may provide an intersection between the sensing substrate 20 and the sensing terminal 30, wherein the intersection between the sensing substrate 20 and the sensing terminal 30 may correspond to a position where a thickness centerline of the sensing substrate 20 crosses a thickness centerline of the sensing terminal 30 in the extension direction of the sensing substrate 20 and the sensing terminal 30. For example, in an embodiment, the intersection between the sensing substrate 20 and the sensing terminal 30 may be made within the through hole 20' of the sensing substrate 20 formed at the third position P3 between the first and second positions P1 and P2; the sensing substrate 20 and the sensing terminal 30 may be positioned at upper and lower positions, respectively, from the first position P1 to the third position P3 in the first direction Z1; and as the upper and lower positions are reversed at the third position P3 corresponding to the intersection, the sensing substrate 20 and the sensing terminal 30 are respectively positioned at the lower and upper positions from the third position P3 to the second position P2.

As such, in an embodiment, the sensing substrate 20 and the sensing terminal 30 may form positions reversed vertically at the first and second positions P1 and P2, and form positions reversed vertically relative to each other. For example, along the level following the second direction Z2 from the terminal surface 11 of the battery cell B on which the sensing unit 25 including the sensing substrate 20 and the sensing terminal 30 is disposed, the sensing substrate 20 and the sensing terminal 30 may form different levels, respectively, at the first and second positions P1 and P2. For example, the sensing substrate 20 may extend from a high level of the first position P1 to a low level of the second position P2, and, conversely, the sensing terminal 30 may extend from the low level of the first position P1 to the high level of the second position P2. To this end, the sensing substrate 20 and the sensing terminal 30 may include transforming units F2 and F3, respectively, for connecting different levels along the level following the second direction Z2 from the terminal surface 11 at the first and second positions P1 and P2, and the deformable units F2 and F3 of the sensing substrate 20 and the sensing terminal 30 connect different levels of the first and second positions P1 and P2 in a stepped or inclined manner. The first and second deformable units F2 and F3 of the sensing substrate 20 and the sensing terminal 30 continuously connect different levels of the first and second positions without disconnection of the sensing substrate 20 between the first and second positions P1 and P2, and to this end, may connect different levels of the first and second positions P1 and in a stepped or inclined manner. For example, the deformable units F2 and F3 may be formed between the first and second positions P1 and P2 of the sensing substrate 20 or the sensing terminal 30. Through the description, when it is assumed that the deformable units F2 and F3 connect the different levels of the first and second positions P1 and P2 in an inclined manner, the inclination may include not only an inclination of a certain angle, but also an inclination of an angle that changes according to the extension direction of the sensing substrate 20 and the sensing terminal 30. In addition, the inclination may be extended linearly or curvedly.

In an embodiment, the deformable unit F2 of the sensing substrate 20 may be formed around the through hole 20' extending in the first direction Z1 to surround the through hole 20' at a position beyond the through hole 20' in the third direction Z3 corresponding to the width direction of the sensing substrate 20. The deformable unit F3 of the sensing terminal 30 may be formed in a through unit penetrating the through hole 20'. the sensing substrate 20 and the sensing terminal 30 may form an intersection in the through hole 20', and more specifically, the periphery of the through hole 20' surrounding the through hole 20' of the sensing substrate 20 may intersect the through unit penetrating the through hole 20' of the sensing terminal 30 to form the intersection. In an embodiment, the sensing terminal 30 may include a metal plate having excellent rigidity; the sensing terminal 30 having excellent rigidity may be assembled with the sensing substrate 20 having low rigidity in a state in which the deformable unit F3 is formed in advance; and the sensing substrate 20 may be flexibly deformed to correspond to the shape of the sensing terminal 30 and adaptively respond to the shape of the sensing terminal 30 to form the deformable unit F2. For example, the sensing terminal 30 having the deformable unit F3 formed in advance may be assembled to the sensing substrate 20 to pass through the through hole 20' of the sensing substrate 20 and may be assembled to the sensing substrate 20 to locate the deformable unit F3 of the sensing terminal 30 in the through hole 20' of the sensing substrate 20, and the deformable unit F2 may be formed around the through hole 20' of the sensing substrate 20 to correspond to the shape of the sensing terminal 30. In an embodiment, the sensing substrate 20 may be provided as a flexible printed circuit board, and the deformation unit F2 may be formed around the through hole 20' which may have excellent flexibility due to the through hole 20' in the sensing substrate 20 in order not to cause damage to the sensing substrate 20 due to lack of ductility of the sensing substrate 20. In some embodiments, the deformable units F2 and F3 of the sensing substrate 20 and the sensing terminal 30 may be formed in the process of bonding to each other through thermal compression or laminating after assembling the sensing substrate 20 and the sensing terminal 30. For example, while an assembly including the sensing terminal 30 inserted into the through hole 20' of the sensing substrate 20 is thermally compressed or laminated in a flat shape, the deformable units F2 and F3 having corresponding shapes may be formed on the sensing substrate 20 and the sensing terminal 30.

As mentioned above, in an embodiment, each of the sensing substrate 20 and the sensing terminal 30 may form a different level from the terminal surface 11 of the battery cell B in the second direction Z2. Unlike this, one of the sensing substrate 20 and the sensing terminal 30 may form a different level at the first and second positions P1 and P2, while the other of the sensing substrate 20 and the sensing terminal 30 may form the same level at the first and second positions P1 and P2, thereby reversing the upper and lower positions of the sensing substrate 20 and the sensing terminal 30 at the first and second positions. For example, the sensing substrate 20 may form different levels at the first and second positions P1 and P2, while the sensing terminal 30 may form the same level at the first and second positions P1 and P2. For example, the sensing terminal 30 may include a relatively hard metal plate, and the sensing terminal 30 of the metal plate having relatively high strength may include a flat metal plate forming the same level, while the sensing terminal 30 forming the same level may extend across the lower position of the sensing substrate 20 and the upper position of the sensing substrate 20 at the same level, which have relatively low rigidity or flexibility. For example, the sensing terminal 30 having excellent rigidity passes through the through hole 20', while the sensing terminal 30 may extend across the lower portion of the sensing substrate 20 at the first position P1 on one side of the through hole 20'. While the sensing terminal 30 extends across the upper portion of the sensing substrate 20 at the second position P2 of the other side of the through hole 20', the deformation units F2 and F3 may be induced between the first and second positions P1 and P2 of the sensing substrate 20 having relatively low rigidity or flexibility. For example, the deformable unit F2 of the sensing substrate 20 may be formed around the through hole 20' of the sensing substrate 20 extending in the first direction Z1 to surround the through hole 20' at a position beyond the through hole 20' in the third direction Z3 corresponding to the width direction of the sensing substrate 20. The periphery of the through hole 20' of the sensing substrate 20 may cross the through unit penetrating the through hole 20' of the sensing terminal 30, and the sensing substrate 20 and the sensing terminal 30 may form the intersection in the through hole 20'.

In some embodiments, as one of the sensing terminal 30 and the sensing substrate 20 forms different levels at the first and second positions P1 and P2 and the other thereof forms the same level at the first and second positions P1 and P2, the sensing substrate 20 and the sensing terminal 30 may form positions in which they are vertically reversed. As mentioned above, in an embodiment, the sensing terminal 30 may form the same level at the first and second positions P1 and P2, while the sensing substrate 20 may form different levels at the first and second positions P1 and P2. Unlike this, in another embodiment, the sensing substrate 20 may form the same level at the first and second positions P1 and P2, but the sensing terminal 30 may form different levels at the first and second positions P1 and P2. For example, the deformable unit F3 may be formed in advance on the sensing terminal 30 having relatively high rigidity, and as the sensing terminal 30 is inserted into the through hole 20' of the sensing substrate 20 so that the deformable unit F3 is located in the through hole 20' of the sensing substrate 20, the sensing terminal 30 may extend across the lower and upper positions of the sensing substrate 20 formed at the same level. In this embodiment, the deformable unit F3 is formed in advance in the sensing terminal 30 having relatively high rigidity, and the sensing substrate 20 with relatively low rigidity assembled with the sensing terminal 30 may be prevented from being damaged during the assembly process. More specifically, to prevent damage to the sensing substrate 20 when the sensing substrate 20, which has relatively low rigidity, is deformed following the shape of the sensing terminal 30, and the sensing substrate 20 may maintain the same level at the first and second positions P1 and P2 and may form the deformable unit F3 on the sensing terminal 30 inserted into the through hole 20' of the sensing substrate 20, instead of the sensing substrate 20. In an embodiment, the intersection may be formed in the through hole 20' at the third position P3 between the first and second position P1 and P2. For example, the through unit of the sensing terminal 30 penetrating the through hole 20' may cross the periphery of the through hole 20' extending in the first direction Z1 to surround the through hole 20' at the position beyond the through hole 20' in the third position Z3 corresponding to the width direction of the sensing substrate 20 in the through hole 20'.

In an embodiment, the third position P3 may be adjacent to the second position P2 in the first direction Z1. For example, the third position P3 providing the intersection may be adjacent to the second position P2 in which the sensing substrate 20 and the sensing terminal 30 whose upper and lower positions are reversed through the third position P3 are coupled. In other words, the second position P2 in which the sensing substrate 20 and the sensing terminal 30 beyond the through hole 20' corresponding to the third position P3 are coupled may be formed adjacent to the through hole 20' corresponding to the third position P3.

In an embodiment, the first and second positions P1 and P2 may respectively refer to positions where the sensing device 40 and the sensing terminal 30 are connected on the sensing substrate 20 in the first direction Z1. For example, in an embodiment, the first position P1 may refer to a position where the sensing device 40 is connected to the sensing substrate 20 or a position where the sensing device 40 is coupled to the sensing substrate 20, and the second position P2 may refer to a position where the sensing terminal 30 is connected to the sensing substrate 20 or a position where the sensing terminal 30 is coupled to the sensing substrate 20. For example, in an embodiment, the sensing device 40 and the sensing terminal 30 may form connections along the sensing substrate 20 at the different first and second positions P1 and P2, respectively, wherein the connections at first and second positions P1 and P2 may be formed through soldering. For example, in an embodiment, the connections at the first and second positions P1 and P2 may be formed through the metal layer formed on the top surface of the sensing substrate 20 among the opposite top and bottom surfaces of the sensing substrate 20. In an embodiment, the sensing substrate 20 may be connected to the sensing device 40 and the sensing terminal 30 at the first and second positions P1 and P2 through the metal layers (first and second bonding pads S1 and S2) formed on the top surface alternatively among the bottom surface facing the battery cell B and the top surface opposite to the battery cell B. In other words, by applying the sensing substrate 20 provided as the single-sided circuit board on which metal layers (first and second bonding pads S1 and S2) are alternatively formed on the top surface, first and second positions P1 and P2 forming the connection on the upper surface of the sensing substrate 20 may be simultaneously and collectively connected. For example, a connection with the sensing device 40 at the first position P1 and the sensing terminal 30 at the second position P2 may be collectively made through the metal layer (first and second bonding pads S1 and S2) formed on the top surface of the sensing substrate 20 using one soldering process such as reflow soldering. In some embodiments, the connection between the first and second positions P1 and P2 may be made through various types of thermal bonding including soldering. For example, the connection may be made by any thermal bonding capable of forming a coupling between the electrode of the sensing device 40 and the metal layer (first bonding pad S1) of the sensing substrate 20 at the first position P1, and the connection may be made by any thermal bonding capable of forming a coupling between the sensing terminal 30 and the metal layer (second bond pad S2) of the sense substrate 20 at the second position P2.

In an embodiment, the sensing substrate 20 forming the coupling at the first and second positions P1 and P2 may be provided as a one-sided circuit board of which metal layers (first and second bonding pads S1 and S2) are formed on the top surface optionally among the top and bottom surfaces of the sensing substrate 20, and may be provided as a flexible circuit board having flexibility. Accordingly, in the soldering process, such as reflow soldering, a support base capable of firmly supporting the flexible circuit board may be provided, and in an embodiment, soldering performed at the first and second positions P1 and P2 on the sensing substrate 20 may be firmly supported through the sensing terminal 30 capable of supporting the sensing substrate 20. For example, in an embodiment, the sensing terminal 30 positioned lower than the sensing substrate 20 at the first position P1 may firmly support the sensing substrate 20 on which the sensing device 40 is formed, and may prevent the sensing device 40 having a relatively narrow soldering area from moving beyond position due to deformation or twisting due to the flexibility of the sensing substrate 20, thereby forming a robust electrical and physical connection between the sensing device 40 and the sensing substrate 20.

According to the disclosure, the connection at the first position P1 or lamination or formation between the sensing substrate 20 and the sensing device 40 etc. at the first position P1 may mean a physical connection as well as an electrical connection comprehensively. For example, the sensing substrate 20 may be electrically connected to the sensing device 40, and the electrical signal about the state information of the battery cell B generated through the sensing device 40 may be transmitted through the sensing substrate 20, where the state information of the battery cell B may be collected through a battery management system(BMS) connected to one end of the sensing substrate 20. Similarly, the connection at the second position P2 or lamination or formation between the sensing substrate 20 and the sensing terminal 30 etc. may mean a physical connection. For example, the sensing substrate 20 may be coupled to the sensing terminal 30 through the physical connection.

In an embodiment, the coupling between the sensing substrate 20 and the sensing terminal 30 may be formed at the second position P2, and may also be formed at the first position P1. More specifically, according to an embodiment, the sensing unit 25 may include the sensing substrate 20 where the sensing device 40 is formed and the sensing terminal 30, and the coupling between the sensing substrate 20 and the sensing terminal 30 may be formed at the first and second positions P1 and P2 in the first direction Z1. For example, the sensing substrate 20 (e.g., the second bonding pad S2 of the sensing substrate 20) and the sensing terminal 30 overlapping at the second position P2 may be coupled via a soldering material, and the sensing substrate 20 may be coupled to the sensing terminal 30 via an adhesive member 60 at the first position P1. In an embodiment, a double-sided adhesive tape may be applied as the adhesive member 60. In an embodiment, the sensing substrate 20 and the sensing terminal 30 may extend long in the first direction Z1 as a longitudinal direction, and may form a coupling at the different first and second positions P1 and P2 in the first direction Z1 so that the sensing substrate 20 is firmly coupled to the sensing terminal 30. In other words, the sensing substrate 20 may be coupled to the sensing terminal 30 through the adhesive member 60 between the bottom surface of the sensing substrate 20 and the top surface of the sensing terminal 30 at the first position P1, and the coupling between the top surface of the sensing substrate 20 and the bottom surface of the sensing terminal 30 may be formed through a soldering material positioned therebetween at the second position P2.

In an embodiment according to e.g., Figs. 5-7, the sensing substrate 20 may include an insulating substrate and a metal layer formed on a surface of the insulating substrate, i.e., a top surface of the insulating substrate opposite to the battery cell B. For example, the sensing substrate 20 may include a copper layer as the metal layer formed on a top surface of a polyimide substrate as the insulating substrate. The metal layer of the sensing substrate 20 may include the first bonding pad S1 formed in a shape corresponding to the electrode of the sensing device 40 at the first position P1 and the second bonding pad S2 formed with a sufficient area to cover the sensing terminal 30 at the second position P2, and in an embodiment, may further include a conductive line L extending from the first bonding pad S1 connected to the electrode of the sensing device 40.

In an embodiment, while the sensing terminal 30 has structural rigidity superior to that of the sensing substrate 20 so as to stably support the sensing substrate 20, the sensing terminal 30 may include a metal material having excellent soldering characteristics with a metal layer (e.g., copper layer) formed on the sensing substrate 20. For example, the sensing terminal 30 may include a metal plate extending in the first direction Z1. More specifically, the sensing terminal 30 may include a nickel plate. In an embodiment, the sensing terminal 30 extending from the first position P1 to the second position P2 in the first direction Z1 may be connected to the battery cell B at the fourth position P4 beyond the second position P2, and may transmit temperature information of the battery cell B as state information of the battery cell B from the second position P2 connected to the battery cell B side to the first position P1 where the sensing device 40 is arranged. To this end, the sensing terminal 30 may include a metal material having excellent thermal conductivity to sensitively acquire the state information of the battery cell B.

In an embodiment, a welding unit W may be formed between the sensing terminal 30 beyond the sensing substrate 20 and the battery cell B side at the fourth position P4 opposite to the first position P1 based on the second position P2. In an embodiment, the sensing terminal 30 beyond the sensing substrate 20 may directly face the battery cell B side and may be directly coupled to the battery cell B side at the fourth position. For example, the sensing terminal 30 may be coupled to the battery cell B side through the welding unit W. For example, the weld unit W formed at the fourth position P4 may form a thermal and/or electrical connection between the sensing terminal 30 and the battery cell B side forming a coupling to each other, and may transmit information such as temperature, voltage, and current as status information transmitted from the battery cell B side, where the state information of the battery cell B transmitted through the welding unit W at the fourth position P4 may be converted to an electric signal related to the state information of the battery cell B to be transmitted to the sensing substrate 20 through the sensing device 40 formed at the first position P1.

In an embodiment, the battery cell B side, as a measurement point capable of measuring the state information of the battery cell B, may broadly mean, for example, a battery cell B itself or a configuration that is thermally and/or electrically connected to the battery cell B, and in an embodiment, may include the battery cell B itself or a bus bar electrically connected to the battery cell B, where the bus bar which is a configuration that electrically connects different battery cells B may be thermally and/or electrically connected to the battery cell B to transmit state information of the battery cell B through the sensing terminal 30 to the sensing device 40.

In an embodiment, the sensing terminal 30 may be directly coupled to the battery cell B itself, and the sensing terminal 30 may be coupled to an outer surface of a case 10 forming an outer shape of the battery cell B. In an embodiment, the sensing terminal 30 may be coupled to the terminal surface 11 where electrode terminals E1 and E2 are formed among the outer surface of the case 10, and the terminal surface 11 to which the sensing terminal 30 is coupled may correspond to a position that is insulated from the electrode terminals E1 and E2 of the battery cell B and away from the charging and discharging path of the battery cell B. Since it is possible to sensitively acquire the state information of the battery cell B away from Joule heating caused by the charging and discharging power of the battery cell B, the configuration in which the terminal surface 11 of the battery cell B is used as a measurement point may increase the reliability of the state information of the battery cell B in an embodiment, compared to the embodiment in which the bus bar forming the charging and discharge path of the battery cell B is the measurement point.

For reference, in an embodiment, the battery cell B may include an internal electrode assembly (not shown) and the case 10 accommodating the internal electrode assembly (not shown), where the case 10 may include main surfaces 13 facing each other between adjacent battery cells B in the first direction Z1, and may include the terminal surface 11 where the electrode terminals E1 and E2 are formed, the bottom surface 12 opposite to the terminal surface 11, and side surfaces 14 connecting the terminal surface 11 and the bottom surface 12 and having a smaller area than the main surface 13.

In an embodiment, the sensing substrate 20 and the sensing terminal 30 forming the sensing unit 25 may extend to different lengths in the first direction Z1. For example, the sensing substrate 20 may extend from the first position P1 to the second position P2 in the first direction Z1, and may not extend to the fourth position P4 beyond the second position P2. In an embodiment, the sensing substrate 20 may extend from the first position P1 to the second position P2 in the first direction Z1. Unlike the sensing substrate 20, the sensing terminal 30 may extend from the first position P1 to the fourth position P4 beyond the second position P2 in the first direction Z1, and may form a coupling with the battery cell B side at the fourth position P4 beyond the sensing substrate 20. In other words, in an embodiment, the sensing substrate 20 and the sensing terminal 30 forming the sensing unit 25 may be arranged to overlap each other from the first position P1 to the second position P2. However, the sensing substrate 20 having the through hole 20' formed at the third position P3 may not overlap the sensing terminal 30 passing through the through hole 20'.

In an embodiment shown in FIG. 4, the sensing substrate 20 and the sensing terminal 30 forming the sensing unit 25 may be coupled through adhesion and thermal bonding at the first and second positions P1 and P2, respectively, e.g., through adhesion at the first position P1 and thermal bonding at the second position P2. For example, the adhesive member 60 may be disposed on the sensing terminal 30 disposed to face the sensing substrate 20 at the first position P1, and the bonding pad (the second bonding pad S2) may be formed on the sensing substrate 20 disposed to face the sensing terminal 30 at the second position P2. The bonding pad (the second bonding pad S2) may correspond to the metal layer formed at the second position P2 of the sensing substrate 20. The sensing substrate 20 may include the first bonding pad S1 formed to correspond to the electrode of the sensing device 40 so as to be connected to the sensing device 40 at the first position P1 and the second bonding pad S2 having a large area covering the sensing terminal 30 so as to be connected to the sensing terminal 30 at the second position P2, wherein the bonding pads S1 and S2 may correspond to metal layers formed on an insulating substrate forming the sensing substrate 20. The conductive line L electrically connected to the bonding pads S1 and S2 may be further included in the insulating substrate in addition to the bonding pads S1 and S2.

FIG. 7 is a diagram showing assembly of the sensing unit 25 shown in FIG. 3. In FIG. 7, the sensing substrate 20 and the sensing terminal 30 forming the sensing unit 25 may be assembled to corresponding positions. For example, the sensing terminal 30 may be inserted into the through hole 20' of the sensing substrate 20 so that the first to third positions P1, P2, and P3 of the sensing substrate 20 correspond to the first to third positions P1', P2', and P3' of the sensing terminal 30. FIG. 7 shows that the first to third positions P1', P2', and P3' of the sensing terminal 30 are aligned based on the first to third positions P1, P2, and P3 of the sensing substrate 20, but it is sufficient if the sensing substrate 20 of the first to third positions P1, P2, P3 and the sensing terminal 30 of the first to third positions P1', P2', P3' are aligned through relative positioning, and the sensing terminal 30 at the fourth position P4' exposed from the third position P3 as inserted into the through hole 20' of the sensing substrate 20 may be connected to the terminal surface 11 of the battery cell B.

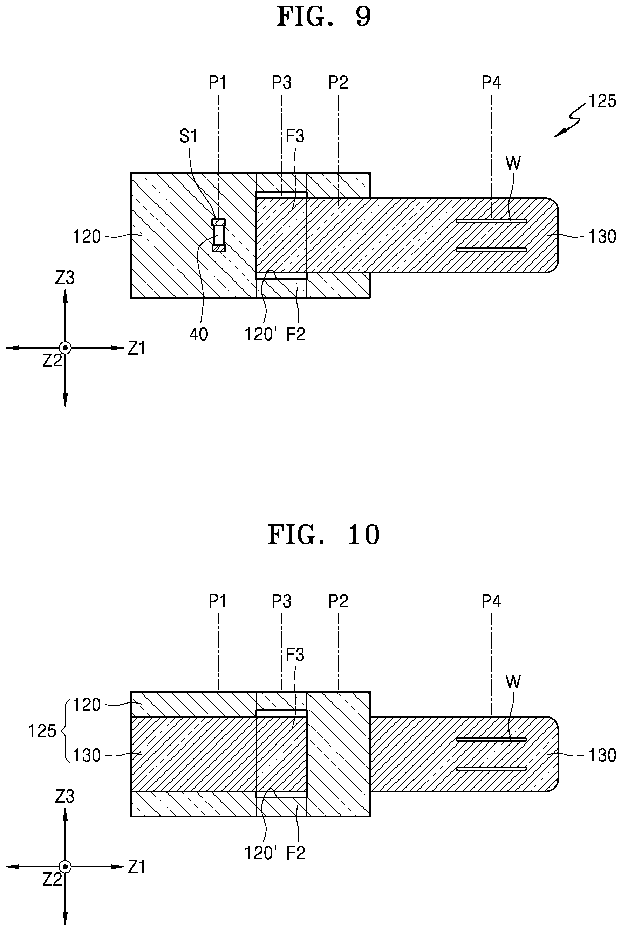

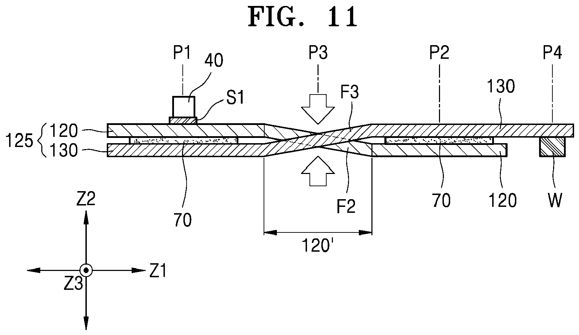

FIG. 8 is a perspective view of a sensing unit according to an embodiment. FIGS. 9 and 10 are diagrams respectively showing different top and bottom surfaces of the sensing unit shown in FIG. 8. FIG. 11 is a cross-sectional view taken along line XI-XI of FIG. 8.

Hereinafter, a battery pack according to another embodiment will be described with reference to FIGS. 8 to 11. Referring to the drawings, in an embodiment, the sensing substrate 120 and the sensing terminal 130 forming the sensing unit 125 may be coupled through thermal compression or laminating at the first and second positions P1 and P2 or through thermal compression or laminating of the first and second positions P1 and P2. For example, in the first direction Z1, the sensing substrate 120 may overlap the sensing terminal 130 except for the third position P3 where the through hole 120' is formed and the fourth position P4 forming a coupling with the battery cell B side, and thermal compression or laminating may be performed over the entire region where the sensing substrate 120 may overlap the sensing terminal 130 in the first direction Z1. Accordingly, unlike the embodiment shown in FIG. 4, in an embodiment of FIG. 11, a separate bonding pad (the second bonding pad S2 in FIG. 4) may not be formed at the second position P2. An adhesive member 70 may be provided between the sensing terminal 130 and the sensing substrate 120 on which the thermal compression or laminating is performed, where the adhesive member 70 may be provided between the upper sensing substrate 120 and the lower sensing terminal 130 at the first position P1, and between the upper sensing terminal 130 and the lower sensing substrate 120 at the second position P2. However, other than the first and second positions P1 and P2, the adhesive member 70 may be formed throughout the area between the sensing substrate 120 and the sensing terminal 130 overlapping each other.

For example, while the coupling between the sensing substrate 20 and the sensing terminal 30 may be separately performed for each of the first and second positions P1 and P2 in an embodiment shown in FIG. 4, the coupling between the sensing substrate 120 and the sensing terminal 130 may be performed collectively at the first and second positions P1 and P2 in the embodiment shown in FIG. 11. For example, thermal compression or laminating may be collectively performed throughout the area between the sensing substrate 120 and the sensing terminal 130 overlapping each other both at the first and second positions P1 and P2.

According to the disclosure, a sensing unit for collecting state information of a battery cell may be formed by applying a one-sided circuit board with a relative low manufacturing cost, and by way of configuration of the sensing circuit and sensing terminal extending to cross each other, opposite top and bottom surfaces of the sensing substrate provided as the one-sided circuit board may be laminated with or coupled to the sensing device and the sensing terminal that extend to cross each other. In this way, by forming laminates of the sensing device and the sensing terminal on the opposite top and bottom surfaces of the sensing substrate, soldering between the sensing device and the sensing substrate may be stably held up and supported by the sensing terminal. Further, according to the disclosure, by applying a sensing substrate provided as a one-sided circuit board, soldering with sensing devices and soldering with sensing terminals may be collectively performed on one side of the sensing substrate.

According to the disclosure, since the sensing device is not disposed on the bottom surface of the sensing substrate facing the battery cell, but is disposed on the top surface of the sensing substrate opposite to the battery cell, damage to the sensing device due to impact with the battery cell may be prevented.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A battery pack comprising at least one battery cell (B); and
at least one sensing unit (25, 125) for acquiring state information of the battery cell (B), the sensing units (25, 125) including:
at least one sensing substrate (20, 120) which extend in parallel in a first direction and include a first position where at least one sensing device (40) is formed; and
at least one sensing terminal (30, 130) connected to the sensing substrate (20, 120) at a second position different from the first position and connected to the battery cell (B) to acquire the state information;
wherein the sensing substrate (20, 120) and the sensing terminal (30, 130) are configured to
overlap each other at the first and second positions, and
extend to cross each other so that upper and lower positions are reversed in the second direction in which the sensing substrate (20, 120) and the sensing terminal (30, 130) overlap each other at the first and second positions.

2. The battery pack of claim 1,
wherein, in the first position, the sensing substrate (20, 120) on which the sensing device (40) is formed and the sensing terminal (30, 130) are arranged at an upper position opposite to the battery cell (B) and at a lower position facing the battery cell (B), respectively, and
in the second position, the sensing substrate (20, 120) and the sensing terminal (30, 130) are arranged at the lower position facing the battery cell (B) and the upper position opposite the battery cell (B), respectively, and/or
wherein the sensing device (40) is formed on a top surface of the sensing substrate (20, 120) opposite to the battery cell (B).

3. The battery pack of claim 1, wherein at least one of the sensing substrate (20, 120) and the sensing terminal (30, 130) includes a deformable unit to connect upper and lower positions that are reversed at the first and second positions.

4. The battery pack of claim 3, wherein the deformable unit connects the upper and lower positions that are reversed at the first and second positions in a stepped or inclined manner, and/or
wherein the sensing substrate (20, 120) crosses the sensing terminal (30, 130) and includes the deformable unit to connect a position higher than the sensing terminal (30, 130) at the first position and a position lower than the sensing terminal (30, 130) at the second position, and/or
wherein the sensing terminal (30, 130) crosses the sensing substrate (20, 120) and includes the deformable unit to connect a position lower than the sensing substrate (20, 120) at the first position and a position higher than the sensing substrate (20, 120) at the second position and/or
wherein at a third position between the first and second positions of the sensing substrate (20, 120) in the first direction, a through hole (20', 120') through which the sensing terminal (30, 130) passes is formed so that the sensing terminal (30, 130) crosses the sensing substrate (20, 120).

5. The battery pack of claim 3, wherein the deformable unit is formed in the through hole (20', 120'), and/or
wherein in a third direction which crosses the first and second directions, the periphery of the sensing substrate (20, 120) extending in the first direction to surround the through hole (20', 120') at a position beyond the through hole (20', 120') of the sensing substrate (20, 120) crosses a through unit of the sensing terminal (30, 130) penetrating the through hole (20', 120').

6. The battery pack of claim 5, wherein at least one of the periphery of the through hole (20', 120') and the through unit extends obliquely to connect the upper and lower positions that are reversed at the first and second positions and cross each other, and/or
wherein the periphery of the through hole (20', 120') and the through unit cross each other while extending obliquely in opposite directions to connect the upper and lower positions that are reversed at the first and second positions.

7. The battery pack of any of claims 1-6, wherein the sensing substrate (20, 120) is bonded to the sensing terminal (30, 130) through thermal compression or laminating, and/or
wherein the sensing substrate (20, 120) extends from the first position to the second position in the first direction, and
the sensing terminal (30, 130) extends from the first position to a fourth position beyond the second position.

8. The battery pack of claim 7, wherein the sensing terminal (30, 130) is connected to the battery cell side at the fourth position beyond the sensing substrate (20, 120) in the first direction.

9. The battery pack of claim 8, wherein the sensing terminal (30, 130) is connected to a terminal surface (11) of the battery cell (B) on which electrodes are formed.

10. The battery pack of claim 9, wherein a welding unit is formed between the sensing terminal (30, 130) and the terminal surface (11) of the battery cell (B).

11. The battery pack of claim any of claims 1-10, wherein a metal layer including a first bonding pad for connection with the sensing device (40) is formed at the first position of the sensing substrate (20, 120).

12. The battery pack of claim 11, wherein a first adhesive member (70) for coupling with the sensing terminal (30, 130) is provided at the first position of the sensing substrate (20, 120).

13. The battery pack of claim 12,
wherein at the first position,
the metal layer including the first bonding pad is formed on a top surface of the sensing substrate (20, 120) opposite to the battery cell (B), and
the first adhesive member (70) is formed on a bottom surface (12) of the sensing substrate (20, 120) facing the battery cell (B).

14. The battery pack of claim any of claims 1-13, wherein a metal layer including a second bonding pad for coupling with the sensing terminal (30, 130) is formed at the second position of the sensing substrate (20, 120), and/or
wherein a second adhesive member (70) for coupling with the sensing terminal (30, 130) is provided at the second position of the sensing substrate (20, 120), and/or
wherein metal layers including first and second bonding pads for connection with the sensing device (40) and the sensing terminal (30, 130) at the first and second positions respectively are formed, and
the metal layers including the first and second bonding pads are formed on the top surface of the sensing substrate (20, 120) opposite to the battery cell (B).

15. The battery pack of claim 14, wherein the sensing substrate (20, 120) is provided as a one-sided circuit board that does not include a metal layer on the bottom surface (12) facing the battery cell (B).
